# EUROPÄISCHE PATENTSCHRIFT

(11) **EP 3 166 903 B1**
(45) Veröffentlichungstag und Bekanntmachung des Hinweises auf die Patenterteilung: **27.11.2019**
(21) Anmeldenummer: 15775411.0
(22) Anmeldetag: 23.09.2015
(51) Int. Cl.: C04B 26/14, C04B 28/00

(54) **HERSTELLEN EINES SCHLICKERS UND BAUTEIL AUS DEM SCHLICKER**
PRODUCTION OF A SLIP AND COMPONENT OF THE SLIP
PRÉPARATION D'UNE SUSPENSION ET COMPOSANT DE BARBOTINE

(30) Priorität: 29.09.2014 DE 102014219652
(43) Veröffentlichungstag der Anmeldung: 17.05.2017
(73) Patentinhaber: Siemens Aktiengesellschaft, 80333 München (DE)
(72) Erfinder: BÖDINGER, Hermann, 81243 München (DE); DENNELER, Stefan, 81371 München (DE); SCHUH, Carsten, 85598 Baldham (DE); ÜBLER, Matthias, 92289 Ursensollen (DE)
(86) Internationale Anmeldenummer: PCT/EP2015/071869
(87) Internationale Veröffentlichungsnummer: WO 2016/050585

(56) Entgegenhaltungen:
- EP-A2- 0 517 129

## Beschreibung

Die Erfindung betrifft ein Verfahren zum Herstellen eines Schlickers, wobei mindestens ein anorganischer Bestandteil mit mindestens einem ersten Binder vermischt wird und der erste Binder eine Mischung aus mindestens einem Epoxidharz und mindestens einem Härtungsmittel für das mindestens eine Epoxidharz aufweist. Die Erfindung betrifft auch ein Bauteil, das mittels eines solchen Schlickers hergestellt worden ist. Die Erfindung ist insbesondere anwendbar zur kostengünstigeren Herstellung von komplexen Metallschaufeln in Gas- und Antriebsturbinen aller Art.

Keramische Gießkerne dienen im Metallfeingussverfahren als verlorene Negativformen dem Aufbau komplex gearteter Positivgeometrien, insbesondere bei der Darstellung mikroskalig-dimensionierter Oberflächenstrukturierungen, die durch herkömmliches Fräsen oder spanende Bearbeitungsformen aufgrund von Hinterschneidungen, Hohlräumen oder werkzeugbedingten Auflösungsgrenzen nicht hergestellt werden können. Insbesondere findet das Verfahren Anwendung zur kostengünstigeren Herstellung von komplexen Metallschaufeln in Gas- und Antriebsturbinen. Dabei bedient man sich zur Darstellung von verlorenen Gießkernen der Schlickermethode, bei der ein bei hohen Temperaturen versinterbares Pulverkonglomerat aus verschiedenartigen, anorganischen Bestandteilen mit zweierlei aufeinander aufbauenden Bindertypen in einem Lösemittel dispergiert wird.

Dieser Schlicker wird in eine Gießform zum anschließendem Härten gegossen. Die Gießform trägt dabei die gewünschte Gestalt- und Oberflächenstrukturierung, die der keramische Gießkern im späteren Zustand annehmen soll.

Durch Applikation von Vakuum und Vibration wird das Lösungsmittel, welches primär der Viskositätserniedrigung dient, abgezogen und dabei gleichzeitig die Füllstoffpulverfraktion absedimentiert und gemäß der maximalen Packungsdichte der Pulverkorngrößenverteilung kompaktiert.

Durch Warm- bzw. Heißhärten bei bis zu 160°C polymerisiert der erste Binder oder Binderbestandteil und gibt dem resultierenden Grünling die später zu sinterfixierende Geometrie.

Dieser Grünling wird folgend von der Gießform befreit und sodann in einem stufenweisen Temperaturprofil zur Keramik gesintert, wobei bis 300°C der erste Binderbestandteil pyrolysiert und größtenteils in Form von gasförmigen Oxidationsprodukten ausgetrieben wird. Damit der entbinderte Grünling vor dem finalen Sintern bei hohen Temperaturen in der Form und Gestalt konserviert wird, dient für gewöhnlich ein zweiter, hochtemperaturfester Binder oder Binderbestandteil, der die Form nach der Entbinderung gewährleistet. Dieser Bestandteil verglast ab ca. 250 °C bis ca. 500°C unter Abgabe volatiler Bestandteile selbst zu einem anorganischen Netzwerk, welches das vollständig entbinderte Sinterkeramikpulver umhüllt und somit fixiert. In einem letzten Temperaturschritt wird die Keramik durch Hochtemperatursinterung produziert, die später dem Metallfeinabguss dient.

US 2011018944 A1 offenbart, dass ein Bindergesamtsystem eine Kombination aus anhydridisch-heißhärtendem, cycloaliphatischen Epoxidharz und reaktivem Festsilikon auf Methylpolysiloxanbasis darstellt. Unter Zugabe von Dispersionsadditiven, Plastifizierern (Kautschuk) und Lösemitteln (Methylethylketon, Isopropylalkohol oder Hexan) lässt sich eine Schlickerformulierung mit einem hohen Anteil an Sinterkeramikpulver bereiten, die zum Guss von verlorenen Keramikgrünkernen tauglich ist. Cycloaliphatische Epoxidharze zeichnen sich durch besonders niedrige, dynamische Viskositäten aus, die geringere nötige Lösemittelgehalte ermöglichen. Die Härterkomponente der Epoxidharze ist für gewöhnlich ein Säureanhydrid, z.B. des Typs Methylhexahydrophthalsäure, Methyltetrahydrophthalsäure oder Methylnadinsäure. Diese Gemische stellen Hochtemperatursysteme dar, die eines Beschleunigers zur Initiierung der Polymerisation bedürfen und Aushärtetemperaturen höher 130°C über mehrere Stunden fordern. Der Reaktionsschwund liegt im Bereich von bis zu 5 Vol.-%. Das reaktive Festsilikon ist ein polykondensationsvernetzendes Alkoxyorganopolysiloxan, welches unter Temperaturbelastung zu amorphem Quarz pyrolysiert. Das Sinterkeramikpulver ist eine multimodale, packungsdichteoptimierte Mischung aus amorphem Quarzgut, Christobalit, Magnesiumoxid, Aluminiumoxid, Yttriumoxid und Zirkonoxid.

EP 0 517 129 A2 offenbart ein Verfahren zur Herstellung eines Schlickers umfassend den Schritt des Vermischens eines anorganischen Bestandteils mit einem Epoxidharzbinder und einem aliphatischen Polyamin.

Es ist die Aufgabe der vorliegenden Erfindung, einen insbesondere keramikpulverbasierten Schlicker bereitzustellen, welcher sich bei besonders geringen Temperaturen stabilisieren lässt. Insbesondere ist es eine Aufgabe der vorliegenden Erfindung, einen Schlicker bereitzustellen, der bei besonders niedrigen Temperaturen die Herstellung stabiler Grünlingsstufen erlaubt.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Herstellen eines Schlickers, wobei mindestens ein anorganischer Bestandteil mit mindestens einem ersten Binder vermischt wird und der erste Binder eine Mischung aus mindestens einem Epoxidharz und mindestens einem sterisch gehinderten Amin als Härtungsmittel aufweist.

Dieser Schlicker weist den Vorteil auf, dass er aufgrund des so ausgestalteten ersten Binders zu seiner Verfestigung nur sehr geringe (Verfestigungs-)Temperaturen benötigt und dennoch einen zur Herstellung eines Körpers mittels des Schlickers ausreichend langen Verarbeitungszeitraum aufweist. Beispielsweise sind Verarbeitungszeiträume des Schlickers von mehreren Stunden erreichbar. Der erste Binder benötigt keine

Beschleunigersubstanzen zur Härtungsinitiierung. Zudem lässt sich mittels dieses ersten Binders eine vollständige Aushärtung bei dieser niedrigen Temperatur erreichen, so dass sich für eine Weiterverarbeitungs-Prozesskette akzeptable Biege- bzw. Bruchfestigkeiten bereitstellen lassen. Ferner lässt sich der erste Binder mit einer geringen Viskosität bereitstellen, was eine Ausformung des Schlickers in einer Gießform erleichtert. Darüber hinaus ist dieser erste Binder mit gängigen Lösemitteln ohne Zersetzung mischbar, und zwar in jedem Verhältnis. Der erste Binder härtet den Schlicker additionsvernetzend nahezu reaktionsschwundfrei in einen stabilen Formkörper.

Insbesondere lassen sich Verfestigungstemperaturen von nicht mehr als 70°C, insbesondere von nicht mehr als 60°C, insbesondere von nicht mehr als 50°C, insbesondere von nicht mehr als 45°C, insbesondere von nicht mehr als 40°C, erreichen. Dies ermöglicht die Verwendung von abwechselnd aufgebrachten Wachstemplaten für zu realisierende Vielwandgeometrien und/oder von Wachsgussformen. Die Eigenschaft der Niedrigtemperaturverfestigung, insbesondere Härtung, erlaubt insbesondere den Aufbau von Vielwandgießkernen durch Verwendung von alternierend aufgebrachten Templatwachs- und Schlickerschichten. Dieses Verfahren kann nur verwendet werden, wenn der erste Binder unterhalb des Wachsschmelzpunktes zum Formkörper polymerisiert. Der Schmelzpunkt gewöhnlicher Wachse beträgt typischerweise 50°C bis 70°C. Derzeit verwendete Binder benötigen dagegen Verfestigungstemperaturen jenseits des Wachsschmelzpunktes zur vollständigen Aushärtung, so dass ein Multischichtdesign mit diesen herkömmlichen Bindern nicht möglich ist.

Jedoch lässt sich der Schlicker auch in beliebige Gussformen eingießen, z.B. in Silikonformen usw. Die niedrige Aushärtungstemperatur ermöglicht dann insbesondere eine Energieersparnis, eine besonders einfache Herstellung und vermeidet eine Erweichung oder sogar Schädigung der Gussform.

Der erste Binder kann insbesondere als eine Bindermatrix vorliegen, die den mindestens einen anorganischen Bestandteil (z.B. Pulver) als Füllstoff enthält.

Ein in beta-Stellung sterisch gehindertes Amin mag insbesondere ein in beta-Stellung zu einer endständigen Amingruppe sterisch gehindertes Amin sein.

Das mindestens eine Epoxidharz mag ein Epoxidharz oder eine Mischung aus mehreren Epoxidharzen sein. Mindestens ein Epoxidharz mag ein 1,2-Epoxidharz sein.

Das Mischen aus dem mindestens einen Epoxidharz und dem mindestens einen sterisch gehinderten Amin kann im Rahmen des Verfahrens stattfinden. Alternativ mag eine vorgefertigte Mischung verwendet werden.

Es ist eine Ausgestaltung, dass als mindestens ein sterisch gehindertes Amin mindestens ein in beta-Stellung organosubstituiertes Amin verwendet wird. Solche Amine ermöglichen die obigen Vorteile mit einem geringen herstellungstechnischen Aufwand und sind preiswert beziehbar. Durch eine sterische Hinderung mittels organischer Gruppen wie Methyl, Ethyl, Propyl und/oder höher in beta-Stellung zum terminalen Amin lässt sich eine Reaktivität der endständigen Amin(o)gruppe in Bezug insbesondere zu 1,2-Epoxidreaktanden deutlich reduzieren und damit der Verarbeitungszeitraum verlängern. Ein durch eine Methylgruppe sterisch gehindertes Diamin ist beispielsweise unter dem Handelsnamen "Jeffamine D-230" von der Firma "Huntsman Corporation" bekannt.

Nicht-sterisch gehinderte Amine haben dagegen in Kombination mit Epoxidharzen bei Raumtemperatur eine Topfzeit von nur wenigen Minuten, was ihre Verwendung als sog. 2K-Sekundenkleber begründet. Da zur Verarbeitung von Schlickerformulierungen jedoch für das Befüllen, Entgasen und Vibrieren der gefüllten Gussform ca. eine Stunde benötigt wird, ist diese ungehinderte Harzspezies per se für den genannten Zweck untauglich. Im Gegensatz dazu zeigen in beta-Stellung organosubstituierten Amine eine deutlich verlängerte Gelzeit bei Reaktion mit 1,2-Oxiraneinheiten, wie z.B. Bisphenol-A-Diglycidyletherharzen (im Folgenden auch als "BADGE" bezeichnet) oder Bisphenol-F-Diglycidyletherharzen (im Folgenden auch als "BFDGE" bezeichnet) .

Allgemein können als Epoxidharz(e) z.B. BADGE, BFDGE und/oder cycloaliphatische Epoxidharze mit endständigen 1,2-Oxiraneinheiten verwendet werden, die z.B. von der Firma Huntsman unter den Handelsnamen "Araldite PY 306", "CY 184" oder "CY 192" oder von der Firma "Momentive" unter den Handelsnamen "EPR158" oder "EPR162" erhältlich sind.

Es ist noch eine Ausgestaltung, dass das mindestens eine sterisch gehinderte Amin mindestens ein sterisch gehindertes Diamin aufweist oder ist. Denn es hat sich gezeigt, dass eine Verwendung von Diaminen unter anderem besonders vorteilhafte Werte einer dynamischen Viskosität ergibt.

Da kurze Amine (einschließlich kurzer Diamine) in Kombination mit 1,2-Epoxidharzen zu relativ spröden Formstoffen aufgrund der ausgebildeten hohen Netzwerkdichte führen, ist eine gewisse Flexibilität im hochpolymeren Netzwerk von Vorteil, um eine Rissinitiierung und einen Rissfortschritt zu unterbinden. Polyethylenglykole mit Repetiereinheiten im Bereich von 3 bis 20 können zu diesem Zwecke in Epoxidharzen als Additive verwendet werden. Besonders vorteilhaft ist es, wenn derartig flexible Segmente als Abstandshalter in sterisch-gehindertem Diamin zugegen sind, da Polyglykole mit terminalen Hydroxygruppen katalytisch auf die Polymerisationsinitiierung wirken. Es ist daher eine vorteilhafte Ausgestaltung, dass dem Härtungsmittel oder dem ersten Binder zusätzlich Polyethylenglykol mit Repetiereinheiten zwischen 3 und 20 beigemischt ist, insbesondere mit Repetiereinheiten zwischen 3 und 20.

Besonders vorteilhafte Strukturen des verwendeten Härtungsmittels, insbesondere Härtermoleküls, umfassen demnach Polyethermethyldiamine. Es ist folglich eine vorteilhafte Ausgestaltung, dass das Härtungsmittel oder der erste Binder Polyethermethyldiamin(e) (im Folgenden auch als "PEMDA" bezeichnet) aufweist.

Es hat sich als besonders vorteilhaft herausgestellt, dass das Härtungsmittel Polyethermethyldiamin(e) des Typs

H₂N-CH(-CH₃)-CH₂-[O-CH₂-CH(-CH₃)]ₓ-NH₂ (I)

mit x einer Repetiereinheit von 0 bis 40, insbesondere von 2 bis 35, insbesondere von 2 bis 34, aufweist. Die dynamischen Viskositäten der Verbindung(en) (I) mit einer Repetiereinheitenzahl x von 2 bis 3 beträgt ca. 10 mPas bei 25°C und ist damit ca. zehnmal niedriger als die dynamische Viskosität des oftmals in heißhärtenden Systemen verwendeten, dünnflüssigen Methyltetrahydrophthalsäureanhydrids.

Da cycloaliphatische Epoxidharze mit sehr niedrigen Viskositäten oftmals dem Typ 3,4-Epoxycyclohexyl-methyl-3',4'-epoxycyclohexancarboxylat ("Cycloaliphat") entsprechen, mag eine Härtung mit dem Härtungsmittel (I) durchgeführt werden, woraus eine äußerst dünnflüssige Bindermatrix resultiert. Die Reaktivität der gehinderten Polyethermethyldiamine ist gegenüber dem 3,4-Epoxycyclohexyl-methyl-3',4'-epoxycyclohexancarboxylat jedoch so gering, dass selbst unter hochprozentiger Beschleunigerzugabe und erhöhten Temperaturen keine Gelierung und/oder Reaktion eintritt.

Gleichzeitig zeigen Bisphenol-A-Diglycidyletherharze (BADGE) oder Bisphenol-F-Diglycidyletherharze (BFDGE) jedoch dynamische Viskositäten im Bereich 4000-12000 mPas bei Raumtemperatur, sodass derartige Mischungen nachteiligerweise relativ zäh sind. Zwar sind destillierte Bisphenol-F-Diglycidyletherharze mit dynamischen Viskositäten im Bereich von 1200-1400 mPas bei Raumtemperatur kommerziell erhältlich, jedoch sind sie teuer und neigen zu rascher Kristallisation, sodass ein Vorwärmen oder gar ständiges Warmhalten zur Formulierung nötig ist, was wiederum beim Mischen mit den sterisch gehinderten Aminen, insbesondere Polyethermethyldiaminen (PEMDA), ggf. zu verkürzten Topfzeiten führen kann.

Es ist folglich eine vorteilhafte Ausgestaltung, dass als das mindestens eine Epoxidharz mindestens eine Bisphenol-A-/Bisphenol-F-Diglycidylether-Abmischung ("BADGE/BFDGE") verwendet wird bzw. das mindestens eine Epoxidharz mindestens eine BADGE/BFDGE-Abmischung aufweist, die keine Kristallisationsneigung mehr zeigt. Die BADGE/BFDGE-Abmischung kann im Rahmen des Verfahrens gemischt werden oder als vorgefertigte Abmischung bereitgestellt werden.

Es ist eine weitere vorteilhafte Ausgestaltung, dass der BADGE/BFDGE-Abmischung oder einer Mischung aus BADGE/BFDGE und PEMDA mindestens ein Reaktivverdünner (im Folgenden auch als "RV" bezeichnet), insbesondere mindestens ein epoxidischer Reaktivverdünner, beigemengt ist. Der mindestens eine Reaktivverdünner bewirkt eine verbesserte dynamische Viskosität des ersten Binders. Vorformulierte Produkte der BADGE/BFDGE-Abmischungen (d.h., BADGE/BFDGE oder BADGE/BFDGE/RV) sind beispielsweise von der Huntsman Corporation unter dem Handelsnamen "Araldite LY 1564", "Araldite LY 1568", "Araldite GY 793" bzw. "Araldite GY 794" erhältlich. Die BADGE/BFDGE-Abmischung mögen aber auch erst im Laufe des Verfahrens zusammengemischt werden.

Es ist eine Weiterbildung, dass der epoxidische Reaktivverdünner ein mono- und/oder bifunktionaler epoxidischer Reaktivverdünner ist. Als Reaktivverdünner können z.B. 1,4-Butandioldiglycidylether, 1,6-Hexandioldiglycidylether, Neopentyldiglycidylether, Cresylglycid o.ä. verwendet werden.

Insbesondere derartige Mischungen (BADGE/BFDGE/RV) oder (BADGE/BFDGE/PEMDA/RV) zeigen dynamische Viskositäten, die mit dem äußerst hochpreisigen, cycloaliphatischen 3,4-Epoxycyclohexyl-methyl-3',4'-epoxycyclohexancarboxylat vergleichbar sind, jedoch die Befähigung zur Polymerisation mit den sterisch behinderten Aminen, insbesondere Polyethermethyldiaminen (PEMDA), aufweisen. Insbesondere die bereiteten Formulierungen aus mono- und bifunktionalen Reaktivverdünnern in Bisphenol-A-/Bisphenol-F-Diglycidylethermischungen mit Polyethermethyldiaminen als Härter besitzen eine niedrigere Mischviskosität als z.B. ein Gemenge aus cycloaliphatischem Epoxidharz und Methylnadinsäure ("MNA") bei relevanten Gießscherraten.

Die Gelierzeiten der Grundkomponentenmischungen wurden an einem Gelzeitmessgerät an füllstofffreien 12g-Massen bei 23°C bestimmt. Eine BADGE/PEMDA (x=2-3)-Matrix (Huntsman CY 228) geliert nach etwa 9,5 h, eine BFGDE/PEMDA (x=2-3)-Formulierung mit destilliertem Bishpenol-F-Diglycidylether (Hexion EPR 0158) nach ca. 16,5 h. Die Verkürzung beim Bisphenol-A-Diglycidylester ist auf die Anwesenheit der hydroxylhaltigen Repetiereinheit zurückzuführen.

Die neuartigen Mischungen mit PEMDA-Härtern, insbesondere gemäß der Formulierung (I), sind in den Lösemitteln Methylethylketon, Aceton und Isopropylalkohol ohne Zersetzung lösbar. Es ist daher eine weitere vorteilhafte Ausgestaltung, dass der Schlicker Methylethylketon, Aceton und/oder Isopropanol als Lösungsmittel aufweist bzw. dem Schlicker beigemischt wird.

Da eine weitere Komponente der Bindermatrix ein kondensationsvernetzendes Festsilikon darstellt, welches sich ebenfalls sehr gut bis gut in o.g. Lösemitteln löst, sind verhältnismäßig geringe Lösemittelgehalte zur Einstellung optimaler Fließfähigkeiten unter Lösung aller Binderbestandteile nötig.

Der mindestens eine anorganische Bestandteil mag mindestens ein Pulver aufweisen bzw. ein anorganischer Pulverbestandteil sein. Der mindestens eine anorganische Bestandteil mag mindestens ein keramisches Pulver aufweisen, insbesondere sinterfähiges keramisches Pulver, z.B. Magnesiumoxid, Aluminiumoxid, Yttriumoxid und/oder Zirkonoxid. Zusätzlich zu dem mindestens einen keramischen Pulver mag der anorganische Bestandteil mindestens ein anorganisches nichtkeramisches Pulver aufweisen, z.B. amorphes Quarzgut und/oder Christobalit. Aus einem zumindest teilweise keramischen Pulver lässt sich ein Grünling oder Grünkörper formen. Das mindestens eine Pulver mag in dem ersten Binder dispergiert sein.

Da eine Dichte des Grünlings wesentlich durch eine maximale Packungsdichte des - insbesondere dispergierten - Keramikpulvers bestimmt ist, ist ein maximaler theoretischer Packungskoeffizient vorteilhafterweise möglichst hoch. Durch Einstellung von Multimodalitäten innerhalb der Füllstofffraktion ist die Möglichkeit bekannt, die Packungsdichte zu erhöhen. So packt ein um einen definierten Partikeldurchmesser gaußverteiltes, monodisperses Pulver etwa zu 64 Vol.-%. Durch ("bimodale") Beimengung mindestens einer weiteren Pulverfraktion, die in ihrem Partikeldurchmesser derart gewählt ist, dass die Zwischenräume oder "Zwickel" der gröberen Pulverpartikel durch die kleineren Pulverpartikel teilweise ausgefüllt sind, resultieren Packungsdichten bis zu 80 Vol.-%. Eine trimodale Pulvermischung erlaubt noch höhere Packungsdichten von bis zu 90 Vol.-%. Multimodale Füllstofffraktionen finden oftmals Anwendung als Sinterpulver, da so genügend Kontakte zwischen benachbarten Pulverpartikeln erzeugt werden, die zu einer besonders porenarmen Sinterkeramik führen. Es ist daher eine vorteilhafte Ausgestaltung, dass der mindestens eine anorganische Bestandteil unterschiedliche Fraktionen, insbesondere Pulverfraktionen, insbesondere Keramikpulverfraktionen, mit zueinander multimodalen (bimodalen, trimodalen usw.) Partikelgrößenverteilungen aufweist.

Eine Erhöhung des maximalen Packungskoeffizienten des Schlickers bzw. eines daraus hergestellten Körpers (insbesondere Grünkörpers) lässt sich vorteilhafterweise durch Inkorporation oder Einbringung von Nanopartikeln, insbesondere anorganischen Nanopartikeln, zu dem Schlicker oder als ein Bestandteil des Schlickers erhöhen. Die Nanopartikel können sich in die Zwischenräume oder Zwickel auch multimodaler Pulvermischungen einbringen. Da anorganische Nanopartikel oftmals als Pulver vorliegen, die zu Agglomeration und Aggregation neigen und mechanisch nur schwer zu trennen sind, ist eine Eindispergierung in den ersten Binder auf diese Weise nur schwer möglich und führt zu starken Viskositätsanstiegen. Abhilfe schafft vorteilhafterweise die Verwendung z.B. von kolloidal-dispersen, anorganischen, amorphen Siliziumdioxid-Nanopartikeln in Lösemitteln. Es ist also ferner eine vorteilhafte Ausgestaltung, dass der Schlicker, insbesondere dessen mindestens ein anorganischer Bestandteil, kollodial-disperse, amorphe Siliziumdioxid-Nanopartikel aufweist, insbesondere als eine Kolloidlösung.

Besonders vorteilhaft und stabil gegen Agglomeration ist eine derartige Kolloidlösung, wenn die Oberfläche der Siliziumpartikel mit einem epoxidverträglichem Haftvermittler kovalent überzogen oder "gecoated" ist. Auf diese Weise erfolgt auch nach Abzug des Lösemittels keine Koagulation bzw. Aggregation der nanoskaligen Füllstoffpartikel.

Es ist außerdem eine Ausgestaltung, dass der Schlicker organische Nanopartikel aufweist. Diese können vorteilhafterweise als Plastifiziermittel dienen.

Die organischen Nanopartikel migrieren, wie die anorganischen Nanopartikel, in die freien Zwischenräume oder Zwickel des Pulvers bzw. Pulverfüllstoffes und wirken als effektive Flexibilisatoren während der Ausbildung des hochpolymeren, spröden Epoxidbindernetzwerkes. Besonders vorteilhaft ist es, wenn die organischen Nanopartikel aus epoxidharzverträglichem Polysiloxan bestehen, da dieses in einem Sinterschritt selbst zu amorphem Siliziumdioxid verglast und so ebenfalls zu einer Erhöhung der Grünlingsdichte führt.

Besonders vorteilhaft ist es, wenn diese organischen und/oder anorganischen Nanopartikel dispergiert in Epoxidharz bzw. in einer Epoxidharzmatrix vorliegen und so besonders leicht dem Schlicker zugeführt werden können.

Es ist eine Weiterbildung, dass der Schlicker mindestens einen zweiten Binder aufweist, der eine höhere Temperaturbeständigkeit aufweist als der erste Binder. Dadurch lassen sich insbesondere keramische Gießkerne vorteilhaft herstellen. Insbesondere lässt sich so eine Form des aus dem Schlicker hergestellten Formkörpers, bei dem der erste Binder bereits ausgetrieben worden ist, auch bei hohen Temperaturen beibehalten, beispielsweise während eines Sinterablaufs.

Der erste Binder und der zweite Binder können auch als erste bzw. zweite Binderbestandteile eines Binders verstanden werden.

Der erste Binder gibt insbesondere einem durch seine Aushärtung in einer Gießform erzeugten Formkörper die grundsätzliche Geometrie oder Form. Der Formkörper mag z.B. als ein später zu sinterfixierender, keramikpulverbasierter Grünling vorliegen.

Dieser ausgehärtete Formkörper mag folgend von der Gießform befreit und sodann in einem stufenweisen Temperaturprofil verfestigt werden. So mag ein Grünling zu einem Keramikkörper gesintert werden. Im Rahmen des Temperaturprofils mag der erste Binder bzw. Binderbestandteil entfernt werden, beispielsweise pyrolysiert werden (z.B. ab ca. 300°C) und dann größtenteils in Form von gasförmigen Oxidationsprodukten ausgetrieben werden. Damit der von dem ersten Binder befreite Formkörper, insbesondere Grünling, vor dem sich anschließenden Sintern bei hohen Temperaturen in seiner Form konserviert wird, dient der zweite, hochtemperaturfeste Binder oder Binderbestandteil, der die Form des Formkörpers nach der Entbinderung von dem ersten Binder gewährleistet. Der zweite Binder mag insbesondere ab 250 °C bis 500 °C verglasen, möglicherwiese unter Abgabe volatiler Bestandteile. Durch die Verglasung mag sich der zweite Binder selbst zu einem anorganischen Netzwerk umbilden, welches das vollständig entbinderte Sinterpulver, insbesondere Sinterkeramikpulver, umhüllt und somit auch bei hohen Temperaturen fixiert.

Es ist eine für eine sichere Fixierung der anorganischen Bestandteile, insbesondere Keramikpulverpartikel, bei hohen Temperaturen vorteilhafte Ausgestaltung, dass der zweite Binder kondensationsvernetzendes Festsilikon aufweist oder ist. Dieses weist unter anderem den Vorteil auf, dass es sich gut in Methylethylketon, Aceton und/oder Isopropylalkohol löst, so dass sich verhältnismäßig geringe Lösemittelgehalte zur Einstellung optimaler Fließfähigkeiten unter Lösung aller Binderbestandteile umsetzen lassen. Auch dies ist ein Vorteil der Verwendung der Lösungsmittel Methylethylketon, Aceton und/oder Isopropylalkohol.

Die Aufgabe wird auch gelöst durch einen Schlicker, der mittels des Verfahren wie oben beschrieben hergestellt worden ist.

Die Aufgabe wird auch gelöst durch ein Bauteil, das mittels eines Schlickers hergestellt worden ist, welcher Schlicker mittels des Verfahren wie oben beschrieben hergestellt worden ist.

Das Bauteil mag insbesondere eine Gussform, insbesondere ein Gießkern, für ein metallisches Gussbauteil sein, z.B. für eine Metallschaufel in Gas- und Antriebsturbinen.

Insbesondere können ein oder mehrere der folgenden Ausgestaltungen und Vorteile erlangt werden:
Durch Verwendung von Bisphenol-A-Diglycidylether, Bisphenol-F-Diglycidylether, mono- und/oder höher funktionalen Reaktivverdünnern auf Epoxidbasis - vorteilhafterweise Mischungen daraus - mit beta-alkylgruppensubstituierten Polyethermonoaminen und/oder Polyetherdiaminen lassen sich niedrigtemperaturhärtende Formulierungen herstellen, die eine vergleichbare bzw. niedrigere Viskosität aufweisen als die dünnflüssigsten heißhärtenden cycloaliphatischen Epoxidharz/Säureanhydrid-Bindersysteme. Diese Mischungen weisen Verarbeitungszeiträume von mehreren Stunden auf und benötigen keine Beschleunigersubstanzen zur Härterinitiierung. Diese Harzmischungen können in jedem Verhältnis mit Lösemitteln zersetzungslos gemischt werden und härten additionsvernetzend nahezu reaktionsschwundfrei zu stabilen Formstoffen. Diese Basisharzmischungen können mit Sinterkeramikpulver angereichert werden und stellen somit Niedrigtemperaturschlickersysteme für Gießkernanwendungen dar. Durch die niedrige Aushärtetemperatur ist die thermische Ausdehnung besonders gering, was eine erhöhte Dimensionstreue in der Auslegung der Sinterkeramikabmaße erlaubt. Nanopartikelangereicherte Masterbatches mit anorganischen Siliziumdioxid-Partikeln, die epoxidharzverträgliche Haftvermittlermoleküle auf der Nanopartikeloberfläche tragen, können zudem als Lösemittellieferant und gleichzeitig als Partikelfeedstock fungieren, und führen so zu erhöhten Grünkerndichten. Organische Nanopartikelbatches mit Polysiloxan-Partikeln stellen wirksame Plastifizierer dar, die selbst bei erhöhten Temperaturen anorganisch verglasen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit einer Zeichnung näher erläutert wird. Dabei können zur Übersichtlichkeit gleiche oder gleichwirkende Elemente mit gleichen Bezugszeichen versehen sein.

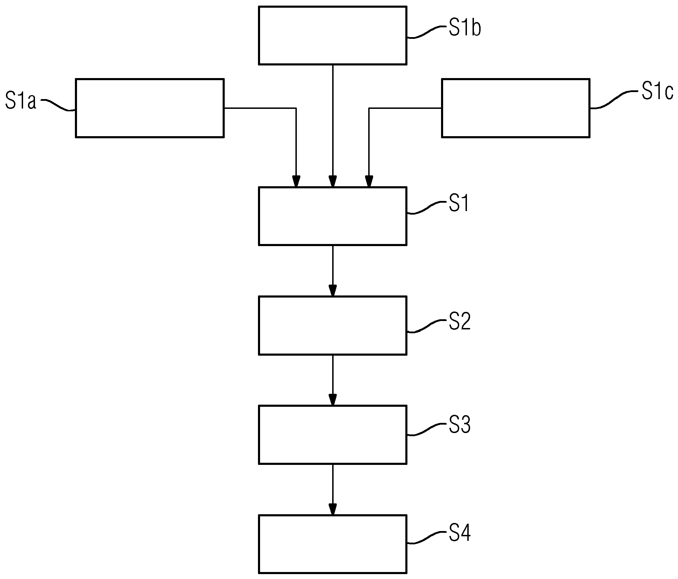

Die Figur zeigt einen möglichen Ablauf zum Herstellen eines keramischen Gießkerns auf der Grundlage des erfindungsgemäßen Verfahrens.

Dazu wird in einem ersten Schritt S1 ein keramikpulverbasierter Schlicker hergestellt.

Und zwar wird dazu in einem ersten Teilschritt S1a eine multimodal größenverteilte Pulvermischung aus einem oder mehreren Keramikpulvern bereitgestellt, z.B. umfassend Magnesiumoxid, Aluminiumoxid, Yttriumoxid und Zirkonoxid. Insbesondere mag die multimodale Pulvermischung eine bimodal oder trimodal größenverteilte Pulvermischung sein.

Ferner wird in einem zweiten Teilschritt S1b ein erster Binder bereitgestellt, und zwar durch eine Zusammenführung einer Abmischung aus BADGE und BFDGE mit PEMDA der Formulierung (I) mit einer Repetiereinheit von 2 bis 34 als Härtungsmittel, wobei zusätzlich noch ein mono- oder bifunktionaler epoxidischer Reaktivverdünner RV hinzugegeben wird.

In einem dritten Teilschritt S1c wird Lösungsmittel in Form von Methylethylketon, Aceton und/oder Isopropanol bereitgestellt. Dem Lösungsmittel sind als kollodial-disperse, amorphe und mit einem epoxidverträglichen Haftvermittler kovalent beschichtete Siliziumdioxid-Nanopartikel beigemischt. Auch sind dem Lösungsmittel als zweiter Binder epoxidharzverträgliche Polysiloxan-Nanopartikel beigemischt.

Durch Zusammenführen der in den Teilschritten S1a, S1b und S1c bereitgestellten Ausgangsstoffe (d.h., dem multimodalen größenverteiltem Keramikpulver, der (BADGE/BFDGE/PEMDA/RV)-Mischung und dem nanopartikel-versetzten Lösungsmittel) wird der Schlicker erzeugt. Das Zusammenführen mag insbesondere ein Dispergieren umfassen. Das Zusammenführen initiiert einen Härtungsablauf des ersten Binders und damit auch eine Verfestigung des Schlickers.

Die in den Teilschritten S1a, S1b und S1c bereitgestellten Ausgangsstoffe können grundsätzlich in beliebiger Reihenfolge zusammengeführt werden.

In einem folgenden Formungsschritt S2 wird der Schlicker in seinem noch viskosen Zustand geformt oder verarbeitet, insbesondere schichtweise alternierend mit Templatwachsschichten zu einem Grünkörper verarbeitet.

In einem anschließenden Härtungsschritt S3 härtet der erste Binder unter Beibehaltung der Templatwachsschichten bei einer Temperatur von nicht mehr als 50 °C, insbesondere von nicht mehr als 40 °C, aus. Am Ende des Härtungsschritts S3 ist der erste Binder vollständig ausgehärtet, und der geformte Schlicker bildet einen Grünkörper mit seiner später zu sinterfixierenden Geometrie. Der Grünkörper hängt noch mit dem Wachs zusammen.

In einem folgenden Temperaturbehandlungsschritt S4 wird der Grünkörper einer Wärmebehandlung unterzogen, nachdem zuvor durch eine Anwendung von Vakuum und/oder Vibration das Lösungsmittel abgezogen worden ist.

Im Laufe des Temperaturbehandlungsschritts S4 wird zunächst das Wachs flüssig und fließt von dem Grünkörper ab. Der Grünling wird also von seiner Wachs-"Gießform" befreit.

Bis ca. 300 °C wird der erste Binder pyrolysiert und größtenteils in Form von gasförmigen Oxidationsprodukten ausgetrieben.

Ab ca. 250 °C bis ca. 500 °C verglast der zweite Binder unter Abgabe volatiler Bestandteile zu einem anorganischen Netzwerk, welches das von dem ersten Binder vollständig entbinderte sinterfähige Keramikpulver umhüllt und somit fixiert.

In einem letzten Temperaturteilschritt werden die Keramikpulverpartikel durch Hochtemperatursinterung gesintert, z.B. zwischen 850 °C und 1300 °C, insbesondere bis ca. 1200 °C, so dass ein gesinterter Keramikkörper entsteht.

Der gesinterte Keramikkörper mag beispielsweise als ein Gießkern oder als eine Gussform für einen späteren Metallfeinabguss dienen.

Obwohl die Erfindung im Detail durch das gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

## Patentansprüche

1. Verfahren (S1, S1a, S1b, S1c) zum Herstellen eines Schlickers, wobei mindestens ein anorganischer Bestandteil mit mindestens einem ersten Binder vermischt wird und der erste Binder eine Mischung aus mindestens einem Epoxidharz und mindestens einem sterisch gehinderten Amin als Härtungsmittel aufweist.

2. Verfahren (S1, S1a, S1b, S1c) nach Anspruch 1, wobei als mindestens ein sterisch gehindertes Amin mindestens ein in beta-Stellung organosubstituiertes Amin verwendet wird.

3. Verfahren (S1, S1a, S1b, S1c) nach einem der vorhergehenden Ansprüche, wobei das mindestens eine sterisch gehinderte Amin mindestens ein Diamin aufweist.

4. Verfahren (S1, S1a, S1b, S1c) nach einem der vorhergehenden Ansprüche, wobei dem Härtungsmittel zusätzlich Polyethylenglykol mit Repetiereinheiten zwischen 3 und 20 beigemischt wird (S1b).

5. Verfahren (S1, S1a, S1b, S1c) nach einem der vorhergehenden Ansprüche, wobei das Härtungsmittel Polyethermethyldiamin aufweist.

6. Verfahren (S1, S1a, S1b, S1c) nach Anspruch 5, wobei das Härtungsmittel Polyethermethyldiamin des Typs H₂N-CH(-CH₃)-CH₂-[O-CH₂-CH(-CH₃)]ₓ-NH₂
mit x einer Repetiereinheit von 0 bis 40, insbesondere von 2 bis 35, insbesondere von 2 bis 34, aufweist.

7. Verfahren (S1, S1a, S1b, S1c) nach einem der vorhergehenden Ansprüche, wobei das mindestens eine Epoxidharz eine BADGE/BFDGE-Abmischung aufweist oder ist.

8. Verfahren (S1, S1a, S1b, S1c) nach Anspruch 7, wobei der BADGE/BFDGE-Abmischung mindestens ein epoxidischer Reaktivverdünner beigemengt wird oder ist (S1b).

9. Verfahren (S1, S1a, S1b, S1c) nach einem der vorhergehenden Ansprüche, wobei dem Schlicker Methylethylketon, Aceton und/oder Isopropanol als Lösungsmittel beigemischt wird (S1c).

10. Verfahren (S1, S1a, S1b, S1c) nach einem der vorhergehenden Ansprüche, wobei der mindestens eine anorganische Bestandteil unterschiedliche Fraktionen mit zueinander bimodalen oder multimodalen Partikelgrößenverteilungen aufweist (S1a).

11. Verfahren (S1, S1a, S1b, S1c) nach einem der vorhergehenden Ansprüche, wobei der Schlicker kollodial-disperse, amorphe Siliziumdioxid-Nanopartikel aufweist, insbesondere wenn eine Oberfläche der Siliziumdioxid-Nanopartikel mit einem epoxidverträglichen Haftvermittler kovalent beschichtet ist (S1c).

12. Verfahren (S1, S1a, S1b, S1c) nach einem der vorhergehenden Ansprüche, wobei der Schlicker organische Nanopartikel, insbesondere epoxidharz-verträgliche Polysiloxan-Nanopartikel, aufweist (S1c).

13. Verfahren (S1, S1a, S1b, S1c) nach einem der vorhergehenden Ansprüche, wobei der mindestens eine anorganische Bestandteil mindestens ein Keramikpulver umfasst.

14. Bauteil, das mittels eines Schlickers hergestellt worden ist, welcher Schlicker mittels des Verfahrens (S1, S1a, S1b, S1c) nach einem der vorhergehenden Ansprüche hergestellt worden ist.

## Claims

1. Method (S1, S1a, S1b, S1c) for producing a slip, wherein at least one inorganic constituent is mixed with at least one first binder and the first binder comprises a mixture of at least one epoxy resin and at least one sterically hindered amine as hardener.

2. Method (S1, S1a, S1b, S1c) according to Claim 1, wherein said at least one sterically hindered amine used comprises at least one amine organo-substituted in beta position.

3. Method (S1, S1a, S1b, S1c) according to either of the preceding claims, wherein the at least one sterically hindered amine comprises at least one diamine.

4. Method (S1, S1a, S1b, S1c) according to any of the preceding claims, wherein additionally polyethylene glycol having repeating units of between 3 and 20 is admixed (S1b) to the hardener.

5. Method (S1, S1a, S1b, S1c) according to any of the preceding claims, wherein the hardener comprises polyethermethyldiamine.

6. Method (S1, S1a, S1b, S1c) according to Claim 5, wherein the hardener comprises polyethermethyldiamine of type H₂N-CH(-CH₃)-CH₂-[O-CH₂-CH(-CH₃)]ₓ-NH₂
where x is a repeating unit of 0 to 40, more particularly of 2 to 35, more particularly of 2 to 34.

7. Method (S1, S1a, S1b, S1c) according to any of the preceding claims, wherein the at least one epoxy resin is or comprises a BADGE/BFDGE blend.

8. Method (S1, S1a, S1b, S1c) according to Claim 7, wherein the BADGE/BFDGE blend has been or is combined (S1b) with at least one epoxidic reactive diluent.

9. Method (S1, S1a, S1b, S1c) according to any of the preceding claims, wherein the slip is admixed (S1c) with methyl ethyl ketone, acetone and/or isopropanol as solvent.

10. Method (S1, S1a, S1b, S1c) according to any of the preceding claims, wherein the at least one inorganic constituent comprises (S1a) different fractions having particle size distributions bimodal or multimodal to one another.

11. Method (S1, S1a, S1b, S1c) according to any of the preceding claims, wherein the slip comprises colloidally disperse, amorphous silicon dioxide nanoparticles, more particularly when a surface of the silicon dioxide nanoparticles has been covalently coated (S1c) with an epoxide-compatible adhesion promoter.

12. Method (S1, S1a, S1b, S1c) according to any of the preceding claims, wherein the slip comprises (S1c) organic nanoparticles, more particularly epoxy resin-compatible polysiloxane nanoparticles.

13. Method (S1, S1a, S1b, S1c) according to any of the preceding claims, wherein the at least one inorganic constituent comprises at least one ceramic powder.

14. Component produced by means of a slip, said slip having been produced by means of the method (S1, S1a, S1b, S1c) according to any of the preceding claims.

## Revendications

1. Procédé (S1, S1a, S1b, S1c) pour la préparation d'une barbotine, dans lequel on mélange au moins un constituant inorganique avec au moins un premier liant et le premier liant présente un mélange réalisé à partir d'au moins une résine époxyde et à partir d'au moins une amine du type à empêchement stérique pour faire office d'agent de durcissement.

2. Procédé (S1, S1a, S1b, S1c) selon la revendication 1, dans lequel, on utilise, à titre d'au moins une amine du type à empêchement stérique, au moins une amine substituée par un groupe organo en position bêta.

3. Procédé (S1, S1a, S1b, S1c) selon l'une quelconque des revendications précédentes, dans lequel ladite au moins une amine du type à empêchement stérique présente au moins une diamine.

4. Procédé (S1, S1a, S1b, S1c) selon l'une quelconque des revendications précédentes, dans lequel on ajoute par mélange à l'agent de durcissement en outre du polyéthylèneglycol comprenant des motifs récurrents en une quantité entre 3 et 20 (S1b).

5. Procédé (S1, S1a, S1b, S1c) selon l'une quelconque des revendications précédentes, dans lequel l'agent de durcissement présente une polyétherméthyldiamine.

6. Procédé (S1, S1a, S1b, S1c) selon la revendication 5, dans lequel l'agent de durcissement présente une polyétherméthyldiamine du type H₂N-CH(-CH₃)-CH₂-[O-CH₂CH(-CH₃)]ₓ-NH₂, comprenant x motifs récurrents en une quantité de 0 à 40, en particulier de 2 à 35, de manière particulière de 2 à 34.

7. Procédé (S1, S1a, S1b, S1c) selon l'une quelconque des revendications précédentes, dans lequel ladite au moins une résine époxyde présente ou représente un mélange BADGE/BFDGE.

8. Procédé (S1, S1a, S1b, S1c) selon la revendication 1, dans lequel, au mélange BADGE/BFDGE, on ajoute par mélange au moins un diluant réactif époxydé (S1b).

9. Procédé (S1, S1a, S1b, S1c) selon l'une quelconque des revendications précédentes, dans lequel on ajoute par mélange à la barbotine de la méthyléthylcétone, de l'acétone et/ou de l'isopropanol à titre de solvant (S1c).

10. Procédé (S1, S1a, S1b, S1c) selon l'une quelconque des revendications précédentes, dans lequel ledit au moins un constituant inorganique présente des fractions différentes possédant des distributions granulométriques bimodales ou multimodales les unes par rapport aux autres (S1a).

11. Procédé (S1, S1a, S1b, S1c) selon l'une quelconque des revendications précédentes, dans lequel la barbotine présente des nanoparticules amorphes de dioxyde de silicium, sous la forme d'une dispersion colloïdale, en particulier lorsqu'une surface des nanoparticules de dioxyde de silicium a été soumise à une enduction covalente à l'aide d'un promoteur de l'adhérence manifestant une compatibilité époxy (S1c).

12. Procédé (S1, S1a, S1b, S1c) selon l'une quelconque des revendications précédentes, dans lequel la barbotine présente des nanoparticules organiques, en particulier des nanoparticules de polysiloxane manifestant une compatibilité époxy (S1c).

13. Procédé (S1, S1a, S1b, S1c) selon l'une quelconque des revendications précédentes, dans lequel ledit au moins un constituant inorganique comprend au moins une poudre de céramique.

14. Composant, qui a été préparé au moyen d'une barbotine, ladite barbotine ayant été préparée au moyen du procédé (S1, S1a, S1b, S1c) selon l'une quelconque des revendications précédentes.
